(19)

**Europäisches Patentamt**
**European Patent Office**
**Office européen des brevets**

(11) **EP 3 127 432 A1**

(12) **EUROPEAN PATENT APPLICATION**

(43) Date of publication:
**08.02.2017 Bulletin 2017/06**

(51) Int Cl.:
*A23L 3/3418* (2006.01)          *A01M 13/00* (2006.01)
*A01G 13/04* (2006.01)          *A23B 7/148* (2006.01)
*A23B 9/20* (2006.01)          *B65D 81/20* (2006.01)
*A01M 17/00* (2006.01)

(21) Application number: **16182637.5**

(22) Date of filing: **03.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.08.2015 IT UB20153011**

(71) Applicant: **Rivoira Gas S.r.l.**
**20159 Milano (IT)**

(72) Inventors:
• **Cardinale, Stefano**
  **20159 Milano (IT)**
• **Camerlingo, Francesco**
  **20159 Milano (IT)**
• **Scoero, Pierangelo**
  **20159 Milano (IT)**
• **Porto, Gianluca**
  **deceased (IT)**

(74) Representative: **Petruzziello, Aldo**
**Racheli S.r.l.**
**Viale San Michele del Carso, 4**
**20144 Milano (IT)**

(54) **METHOD FOR DISINFESTING FOODSTUFFS STORED IN SACKS AND/OR LOOSE**

(57)     A description is given of a method for effectively treating in situ an infestation of insects (in the different stages of growth such as eggs, larvae or adults) and/or microorganisms in food products such as foodstuffs, grains, cereals or the like, such as for example rice, pet food and the like, stored in containers in the form of big-bags and/or containers, present in warehouses for distribution and/or processing, which method comprises the step of feeding, inside a chamber with a determined free volume and containing said infested food product, a flow of $CO_2$, preferably under pressure, having a temperature of at least 15°C, said flow being fed so as to have an initial concentration of carbon dioxide in said chamber of at least 40% by volume, preferably 60% by volume, feeding until arriving at a concentration of 100% of $CO_2$ in said chamber such as to have an environment free of oxygen.

FIG. 1

EP 3 127 432 A1

**Description**

The present invention relates to a method for effectively treating an infestation or contamination of insects (in the different stages of growth such as eggs, larvae or adults) and/or microorganisms present, for example, in foodstuffs, grains, cereals, pet food and the like, in particular in rice, packaged in sacks, big-bags and/or containers stored in distribution and/or processing warehouses.

The present invention also relates to an apparatus for performing in situ, inside said distribution and/or processing warehouses, the treatment of disinfestation by means of biological fumigation with the sole use of $CO_2$, as sole fumigating agent, in particular working conditions.

Additionally the present invention also relates to a method for effectively treating infestations of insects (in the different stages of growth such as eggs, larvae or adults) and/or microorganisms present in tree species, including those that give rise to the aforesaid food products.

Insects are certainly the most important and widespread agents of infestation of stored foodstuffs and can be divided into two categories: the "habitual" insects which live stably in the warehouses or in the silos in that they typically feed on certain stored food products and/or raw materials, as well as the passing insects that have accidentally entered the storage warehouses.

Since almost all the species which attack foodstuffs have interruptions in activity which can be distinguished in summer or winter dormancies and diapauses, or hibernation, the development of infestations have to be controlled very precisely, starting from the phase of harvesting up to processing of the foodstuff, with special focus on the storage in that this period, which is often prolonged in time, represents the time of greatest risk for the onset of infections and for also huge damage to the product.

When the infestations are already underway, processes of fumigation are generally used which provide for the use of specific fumigating agents, substances normally aggressive in themselves and toxic like, for example, methyl bromide and phosphine.

The banning of many fumigating products and pesticides including in fact methyl bromide and phosphine, during recent years, has produced renewed interest in the use of alternative and non-toxic fumigation technologies for the purpose of weakening infestations already underway by insects and bacteria in food products stored in big-bags, containers or silos inside distribution and/or processing warehouses.

An example of this alternative technology is represented by a batch process which uses an autoclave inside of which the infested granular product is placed, which is first subjected to a high degree of vacuum so as to cool the product and the insects, and then to a high-pressure flow of a gas able to regulate the quantity of insects, such as for example $CO_2$. See for example patent application JPH-08242830.

However this method shows the disadvantage of requiring a costly investment and of having a large space available for positioning the autoclave system, elements which entail an excessive burden for the small/medium-sized distributors of foodstuffs, grains, cereals and the like.

Moreover this system provides for a high energy and $CO_2$ consumption due to the high-pressure flow and the vacuum, as well as a waste of time for unpacking from the container the infested product and loading it in the autoclave.

The need is therefore currently very much felt to have available alternative and non-toxic technologies, so as to be able to provide a natural and biological fumigation method, which however is at the same time also economically advantageous for medium/small-sized distributors of foodstuffs, grains, cereals, pet food and the like and which ensures high fumigation efficacy.

As an alternative to fumigation, use is made very often in the art of preventive treatments aimed at creating unfavourable conditions for the introduction of pathogenic microorganisms and/or insects and at the same time at keeping under control any processes of development, for example by controlling the content of oxygen and of humidity, using atoxic antimicrobial compounds or specific controlled atmospheres.

For example the use is known of fluxing with $CO_2$ in storage silos present on the premises of primary producers of rice in order to create a controlled inert atmosphere so as to be able to conserve the rice for a long period without having infestations.

The purpose of this continuous fluxing, at atmospheric pressure, is that of maintaining permanently a certain absence of oxygen with respect to its stechiometric content in the air so as to avoid the natural infestation of the newly harvested rice.

However this method, which is widely used by large-scale primary producers, is not easy to use by small/medium-sized distributors since in their warehouses generally there are no silos but simply big-bags or containers.

Moreover this method of prevention is found to be very costly due to the high fluxes in movement necessary for maintaining the required modified atmosphere, also due to the low gas tightness of the silos.

Additionally this fluxing cannot be applied to the products contained in packaging intended to be moved/transported such as big-bags and containers.

The object of the present invention is that of overcoming, at least in part, the disadvantages of the prior art by providing a system of natural and biological fumigation, which allows this fumigation to be performed in situ at the distribution/processing warehouses where there are big-bags (or sacks) and/or containers, without having necessarily to unpack the infested product.

A further object is that of providing such a system which is also financially advantageous for medium/small-sized distributors of foodstuffs, grains, cereals, pet food and the like.

These and other objects are achieved by the method of fumigation and by the relative apparatus in accordance with the invention having the features listed in the annexed independent claims.

Advantageous embodiments of the invention are disclosed by the dependent claims.

One object of the present invention relates to a method for an effective treatment in situ of an infestation of insects (in each of the different stages of growth such as eggs, larvae or adults) and/or microorganisms in food products such as foodstuffs, grains, cereals or the like, such as for example rice, pet food and the like, stored in containers in the form of sacks, big-bags and/or containers, present in warehouses for distribution and/or processing of said food products, which comprises the step of feeding, inside a chamber, generally closed, having a determined free volume and containing said infested food product, a flow of a fumigating agent composed solely of $CO_2$, preferably a pressurised flow, having a temperature of at least 15°C, said flow being fed so as to have an initial concentration of carbon dioxide in said chamber of at least 40% by volume, preferably 60% by volume, the part remaining to 100 being formed by air, continuing to feed said flow of $CO_2$ until reaching, in said chamber, a concentration of at least 60-80% by volume, preferably comprised between 65-80% by volume, more preferably 100% of $CO_2$ such as to have an oxygen-free and air-free environment in said chamber, so as to expose said food product solely to $CO_2$.

Once the aforesaid concentration of $CO_2$ has been reached and maintained inside the chamber, the aforesaid blowing of $CO_2$ will be maintained for a certain period of time which depends on the infesting species to be eliminated as will be described here below.

The abovementioned chamber containing said infested food product can be formed and/or delimited by

- a particular gas-barrier and heat-sealable shell, in the form of cloth or sack open at the head, placed around a respective big-bag or sack, or
- a container, in particular an ISO container, containing the infested food product in loose form or stored in big-bags or in sacks.

"Big-bag" here is intended to identify those flexible containers with a parallelepiped or cylinder shape, otherwise defined as large sacks or FIBC (acronym of flexible intermediate bulk container) with base 110 x 110 cm, height from 100 to 200 cm with maximum capacity of 2000 kg, used to transport and store large quantities of loose solid products, in granules, and also sludges and products in paste, normally made in materials without properties of barrier to gases and to steam, for example in fabric of raffia or polyethylene or polypropylene, in jute or in nonwoven material.

"ISO container" here is intended to identify a parallelepiped in metal of international dimensional standardisation, whose measurements are: width of 244 cm, height of 259 cm, and two different standard lengths of 610 and 1220 cm, provided with homogeneous attachments placed on the corners of the container, for the attachment on the various transport means.

For particular uses ISO containers tank, refrigerator, open top (with openable ceiling) ISO containers and containers with openable side walls have been provided.

As mentioned, the flow of said fumigating agent composed solely of $CO_2$ is set so as to have, in the chamber in which it is fed, an initial concentration of $CO_2$ of at least 40% by volume, preferably at least 60% by volume, more preferably at least comprised between 65% and 80%.

The concentration of $CO_2$ can be measured according to methods known in the art, for example by means of an analyser of $CO_2$, both of the portable and fixed type, typically provided with an infrared sensor.

More particularly, in the case of a big-bag (or sack) a sensor is used which is introduced, via a sensor cable, through a small sealed hole formed in the barrier shell.

With the same flow the temperature of treatment is preferably comprised between 18°C and 40°C, more preferably between 18°C and 30°C, so as to have a percentage of mortality of 100% obtained in a reduced length of time, for example less than 12 days according to the infestant.

In fact the Applicant has found that as the temperature increases both the solubility of the $CO_2$ in the tissues of the infestants and the metabolism of the same increase: an increase in the metabolism raises breathing activity and facilitates absorption of $CO_2$ by the insects and/or the microorganisms, encouraging in this way the disinfestating action of the gas, thus making the $CO_2$ an effective fumigating agent such as not to necessitate its mixing with other fumigating compounds such as $SO_2$, $O_3$ and the like.

It is moreover preferable to operate at a pressure slightly higher with respect to the atmospheric one, for example with an overpressure of approximately 0.2-0.5 bar with respect to atmospheric pressure, in order to make the treatment more effective, reducing the times for reaching a mortality of 100% (greater speed of disinfestation).

The Applicant has in fact found that carbon dioxide, fed in the abovementioned operating conditions, allows the elimination in a short time not only of the adult and larva stage but also the eggs laid in depth thanks to the capacity for penetrating the surface layers, so that the $CO_2$ is found to be an effective fumigating agent on all the stages of the life of the insect.

The $CO_2$ used here is preferably of natural and geological origin (i.e. through extraction from mineral deposits), certified for food use and authorised by the Health Ministry for use as biocide according to the directive 98/8/CE, which after treatment does not leave any residue on the treated product.

As mentioned, in the case wherein the infested food product is stored inside big-bags (or sacks), the present method provides advantageously for the combined use of a particular barrier shell having a high barrier to $CO_2$, in sack form, and of the following steps:

- inserting a big-bag (or sack), structurally intact and containing the infested food, inside a sack with high/very high barrier to the $CO_2$, with a permeability in terms of $O_2$ lower than or equal to 3.0 cc/m$^2$.24hr.1 bar, preferably comprised between 0.5 and 3.0 cc/m$^2$·24hr·1 bar and even more preferably a permeability below 0.5 cc/m$^2$·24h·1 bar, in particular below 0.1 cc/m$^2$·24hr·1 bar, and acting as outer container;
- blowing $CO_2$ in said barrier sack in such a quantity as to have an initial concentration of carbon dioxide of at least 60% by volume, until permeating completely the free volume of said chamber formed between said barrier sack and said big-bag (or sack) so as to reach a concentration of $CO_2$ of 100% and absence of oxygen and air;
- closing said outer barrier sack by heat sealing so as to maintain substantially constant said 100% concentration of $CO_2$ in said chamber so as to expose the food product contained in the big-bag to solely $CO_2$.

The infestation of a big-bag (or sack) is noted by opening the same to evaluate visually the presence of excrements, dead insects and eroded products which are the main indicators of infestation.

The aforesaid evaluation is obviously applicable also to the products contained in a container.

The abovementioned barrier sack is generally formed by a barrier material in plastic, in particular by a flexible and heat-sealable laminate multilayered film, of the polymer+Al+polymer type, and can be a laminate multilayered material known in the art of high-barrier packagings.

A preferred example of this barrier polybonded material is the following:

$$\text{PET (12 my)} + \text{Al (9 my)} + \text{LLDPE (110 my)}$$

It is understood that other types of barrier film having a permeability in terms of $O_2$ smaller than or equal to 3.0 cc/m$^2$.24hr.1 bar, preferably comprised between 0.5 and 3.0 cc/m$^2$·24hr·1 bar and even more preferably a permeability below 0.5 cc/m$^2$·24hr·1 bar, can be used without thereby departing from the sphere of the present invention.

The treatment with the aforesaid barrier sack is found to be advantageous as it also avoids the possible back contamination in the warehouse or in transport which normally occurs after the conventional fumigation treatments.

In the case wherein the infested granular food is stored inside a container, in loose form or packed in a big-bag (or sack), the present method provides advantageously the steps of:

- blowing said fumigating agent composed of solely $CO_2$ inside said container in such a quantity as to have an initial concentration of carbon dioxide of at least 60% by volume, until permeating completely the free volume inside said container so as to reach a concentration of $CO_2$ of 65-80%, preferably 100%,
- continuing to blow $CO_2$ to maintain substantially constant the concentration of 65-80%, preferably 100% of $CO_2$ and the pressure inside the container following possible leaks of $CO_2$ so as to expose the content of said container to solely $CO_2$.

The aforesaid blowing of $CO_2$ ends at the end of the treatment, i.e. after a certain period of time which depends on the infesting species as will be described in detail here below.

Since the container is not watertight, it is advantageous to provide a system of control of the internal pressure.

This system is suitable for making a certain quantity of $CO_2$ enter the container through an appropriate valve, apt to restore the internal pressure corresponding to the preset concentration so as to maintain substantially constant the concentration of 60-80%, preferably 100%, of $CO_2$ throughout the treatment.

As mentioned above, the $CO_2$ which enters the barrier sack or the container has a temperature comprised between 15 and 40°C. In the case wherein the temperature is lower, a heater is provided as will be described here below.

The treatment times, for the big-bag (or sack) or for the container, vary according to the type of infestant, the humidity and the temperature, the working pressure in the chamber, the tightness of the container and of the barrier sack, but nevertheless the working conditions are set so as to have a treatment with a mortality of 100% in a preset treatment time, preferably comprised between 8 and 12 days according to the foodstuff and to the infestant.

An example of the times taken (days) for reaching a 100% mortality of some infesting species of rice, at atmospheric pressure and in different conditions of temperature and of initial concentration, is represented by the data shown in Table 1 below:

Table 1

| Infestants | T= 18 - 25° C | | T = 26 - 30° C | |
|---|---|---|---|---|
| | $CO_2 = 60\%$ | $CO_2 = 80\%$ | $CO_2 = 60\%$ | $CO_2 = 80\%$ |
| **Rice weevil or Calandra** | 7 | 6 | 6 | 5 |
| **Maize weevil** | 7 | 6 | 5 | 5 |
| **Oryzaephilus surinamensis - sawtoothed grain beetle** | 8 | 7 | 5 | 4 |
| **Tribolium castaneum - red flour beetle** | 7 | 6 | 5 | 4 |
| **Lesser grain borer** | 9 | 8 | 7 | 6 |
| **Plodia interpunctella - Indian mealmoth** | 6 | 6 | 5 | 4 |
| **Ephestia kuehniella - Mediterranean flour moth** | 4 | 4 | 4 | 3 |

The test for evaluating the degree of mortality, after the fumigating treatment with $CO_2$ according to the present invention, can be performed in various ways according to prior arts, for example by performing a biological test in climate-controlled cell of the fumigated samples, kept at t = 25°C for 32 days, so as to highlight the absence/presence of live individuals and of traces of their development.

The use of the $CO_2$ as single fumigating agent is also advantageous since it drastically lowers also the content of moulds and bacterial load present in the products subjected to the treatment in the aforesaid working conditions, in particular in the cereals which represent an optimal culture substrate for the development of microorganisms, reducing drastically the risks of the formation of mycotoxins (reduction equal to approximately 1/1000 of the values relating to moulds and CMT) during the phases of storage and of subsequent processing.

The treatment in container and/or big-bag (or sack) of the present invention is performed by associating it with a system which provides for the use of one or more cylinder bundles (or of a cryogenic unit) containing only $CO_2$ and with a unit of management and control as will be illustrated here below.

Therefore the object of the present invention is also an apparatus for performing the disinfesting treatment in situ, without unpacking the infested product, performing a fumigation with $CO_2$ directly on the big-bag (or sack) or container, as will be described here below.

Further features of the invention will be made clearer by the following detailed description, referred to a purely non-limiting example thereof, illustrated in the accompanying drawings in which:

Figure 1 is a schematic perspective view of the system for performing in situ, and simultaneously, the disinfesting treatment (fumigation) of a container and of a big-bag by fumigation with $CO_2$ in accordance with the present invention;

Figure 2 is a synthetic diagram relating to the elements forming a system in accordance with the present invention for performing the disinfesting treatment (fumigation) in situ of a container.

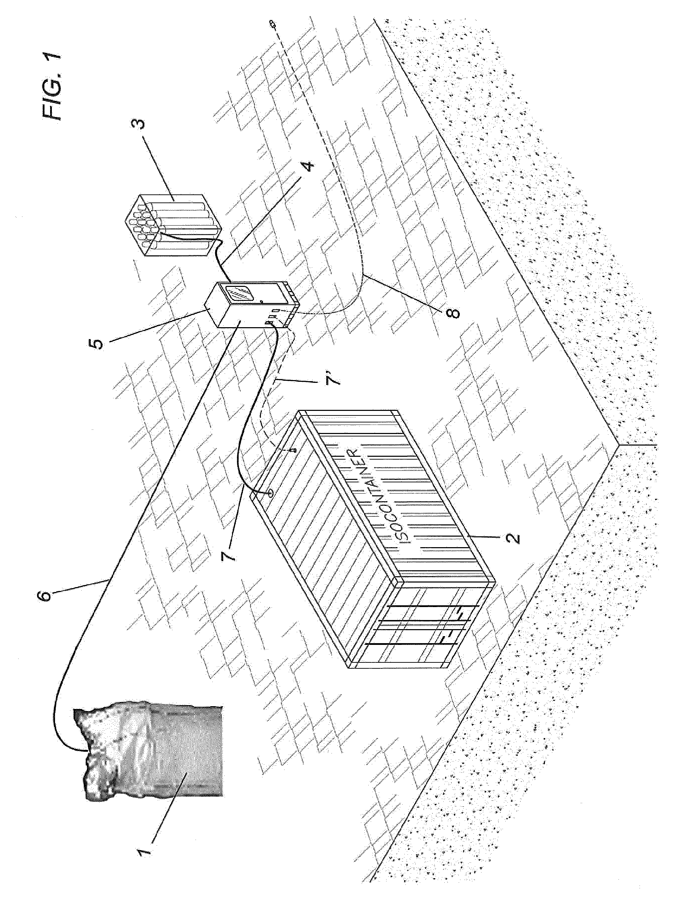

Figure 1 illustrates a system of fumigation in situ of food products such as foodstuffs, grains, cereals, pet food or the like, by means of fumigation with $CO_2$ in accordance with the present invention.

Said infested food products are contained in a container 2 and in a big-bag housed in a barrier sack 1 as defined above, where the container 2 and the barrier sack 1 are fed in parallel with flows of $CO_2$: it is understood however that different combinations can be provided without thereby departing from the sphere of the present invention, for example a system which provides only big-bags fed simultaneously by one or more cylinder bundles or by cryogenic plants, or a system which provides only containers fed simultaneously by one or more cylinder bundles or by cryogenic plants.

The container 2 stores in its interior the food product in loose form or it can store a plurality of big-bags (or sacks) containing in turn the infested food product, without thereby departing from the sphere of the present invention.

The system in accordance with the invention illustrated in Figure 1 moreover comprises as source 3 of $CO_2$ a

cylinder bundle, which feeds, via a feeding line 4, a management and control unit 5 for the management and control of the valves and of the instruments (not illustrated in Figure 1) intended for the functioning of the present system.

It is understood that the source 3 of $CO_2$ can be formed by one or more cryogenic stores of $CO_2$, rather than a plurality of cylinder bundles, or by a combination thereof without thereby departing from the sphere of the present invention.

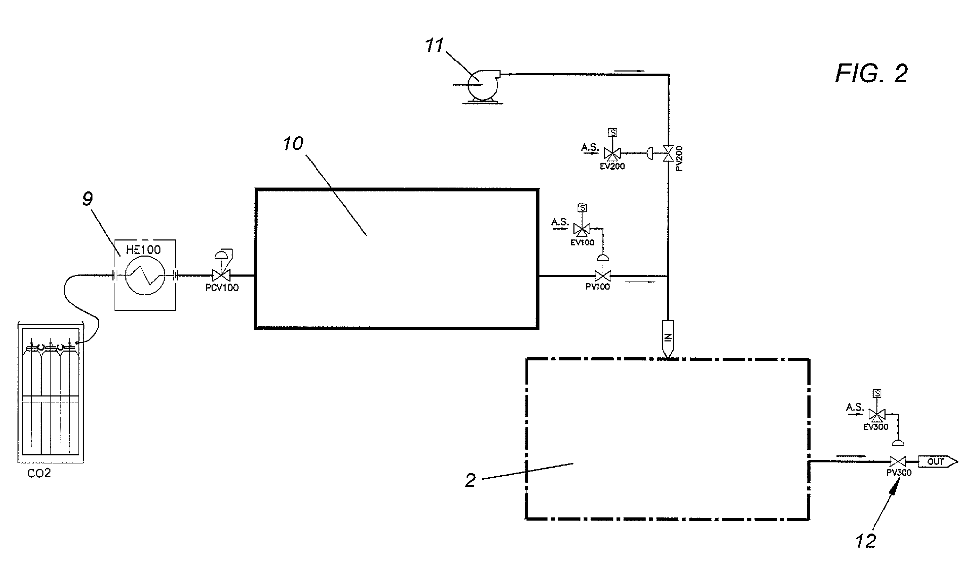

Said management and control unit 5, fed electrically by an electrical power supply line 8, provides (normally in proximity of the storage, but if the back is very long on board use can be provided) a heater 9 (illustrated in Figure 2) apt to heat appropriately, if necessary, the flow of $CO_2$ exiting from said control unit 5.

From said control unit 5 exits

- at least one flow line 6 of said fumigating agent made up solely of $CO_2$ to feed said barrier sack 1 in whose interior the big-bag containing the infested product has been previously been housed;

and/or

- at least one flow line 7, 7' of said fumigating agent made up solely of $CO_2$ for feeding said container 2 in whose interior is housed the loose infested product, or one or more big-bags containing the infested product.

As mentioned, the feed lines 4, 6, 7,7', wherein said fumigating agent made up solely of $CO_2$ flows, provide a series of valves and instruments apt to check that the $CO_2$ which enters the barrier sack 1 and/or container 2 has the pressure, the temperature and the concentration required. Pressure control valves, flow meters, safety valves and other possible additional components known in the art for the control and safety of gas flows are provided.

More particularly, with reference to Figure 2, in the case of treatment in situ of a container 2, the system of the present invention provides, as well as the source 3 of $CO_2$ (which can be stored compressed in cylinders or in cryogenic tank) and the container 2, a heater 9, a unit 10 which includes pressure control valves, flow meters, safety valves and a blanketing valve 12 for discharging, at the end of the disinfestation cycle, the $CO_2$ contained inside the container 2, and an air fan 11 for cleaning the container 2 after having discharged the $CO_2$ so as to allow the access of staff at the end of the disinfestation cycle.

The fumigating treatment of the present invention can therefore be performed autonomously in situ on existing containers and/or big-bags (or sacks) by supplying, even only temporarily for a prefixed period, a simple system which needs one or more cylinders solely of $CO_2$ or cryogenic plant, relative piping, generally in stainless steel and a management and control unit.

The fumigating treatment of the present invention can also be performed on foods and/or pet food already portioned in packagings with a base of polymer films not gas-tight, rather than in big-bag (or sack) without thereby departing from the sphere of the present invention. In this case the portioned packaging of pet food will be inserted inside the barrier sack 1 as defined above, then blowing $CO_2$ in said barrier sack 1 in such a quantity as to have an initial concentration of carbon dioxide of at least 60% by volume, until permeating completely the free volume comprised between said barrier sack and said portioned packaging so as to reach a concentration of $CO_2$ of 100% and absence of oxygen, then closing said barrier sack by heat sealing.

In the case wherein said packagings of foods and/or pet food are contained in a container 2, $CO_2$ can be blown in said container 2 in such a quantity as to have an initial concentration of carbon dioxide of at least 60% by volume, until permeating completely the free volume inside the container 2, so as to reach a concentration of $CO_2$ of 100% and absence of oxygen, blowing $CO_2$ to maintain substantially constant the concentration of $CO_2$ of 100% and the pressure inside the container 2 following possible leaks of $CO_2$.

The present fumigating treatment has moreover been found to be effective also for the in-situ treatment of infestations or contaminations of insects (in the different stages of growth such as eggs, larvae or adults) and/or microorganisms present in tree species, including those that give rise to the aforesaid food products.

A further object of the present invention is therefore represented by a method for effectively treating an infestation of insects, larvae and the like, present in tree species, including those that give rise to the aforesaid food products, which provides for

- covering or wrapping the tree species with a barrier sack forming a chamber with a determined free volume around said tree species or wrapping a barrier cloth apt to form a chamber with a certain free volume around said tree species, said barrier sack and said barrier cloth being made in a barrier material as defined above, in particular a barrier material in plastic;
- blowing a flow of a fumigating agent composed solely of $CO_2$ having a temperature of at least 15°C, preferably under pressure, inside said chamber, feeding in such a way as to have an initial concentration of carbon dioxide of at least 40% by volume, preferably at least 60%, the part remaining to 100 being air, continuing to blow $CO_2$ to

reach a $CO_2$ concentration of 100%, blowing $CO_2$ until maintaining substantially constant the concentration of 100% of $CO_2$ in said chamber following possible leaks of $CO_2$.

The following are some non-limiting examples illustrating the invention.

EXAMPLE 1

Italian rice in big-bag (with a shell which is heat-sealable to a gas-tight film made of aluminium + polymeric multilayers), with test performed on 4 different rice processing factories.

Final concentration of $CO_2$ inside each big-bag: 100%;
Temperature: exited from cylinders at 13°C, heated up to 18°C;
Consumption of $CO_2$: 4 kg/tonne;
Duration of the treatment: 8/10 days;
Mortality: 100%.

The biological test in climate-controlled cell on the samples (t = 25°C) for 32 days has shown the absence of live individuals and of traces of their development.

EXAMPLE 2

Italian rice in 10 big-bags contained in container, said test being performed at a rice processing factory.

Final concentration of $CO_2$ inside each big-bag: 100%;
Temperature of $CO_2$ in input to the container: 18 - 22°C;
Consumption of $CO_2$: 250/280 kg per treatment;
Duration of the treatment: 8/10 days;
Mortality: 100%.

The biological test in climate-controlled cell on the samples (t = 25°C) for 32 days has shown the absence of live individuals and of traces of their development.
The present invention is not limited to the particular embodiments described previously and illustrated in the accompanying drawings, but instead numerous detail changes may be made thereto within the reach of the person skilled in the art, without thereby departing from the scope of the same invention, as defined in the appended claims.

**Claims**

1.    Method for an effective treatment in situ of an infestation of insects (in each of the different stages of growth such as eggs, larvae or adults) and/or microorganisms in food products such as foodstuffs, grains, cereals such as for example rice, pet food and the like, stored in containers in the form of big-bags, sacks and/or containers, present in distribution and/or processing warehouses of said food products, which method comprises the step of

feeding a flow of a fumigating agent composed solely of $CO_2$ having a temperature of at least 15°C, preferably a pressurised flow, inside a chamber having a determined free volume and containing said infested food product, said flow being fed so as to have an initial concentration of carbon dioxide of at least 40% by volume in said chamber, preferably at least 60% by volume, the part remaining to 100 being air,
continuing to feed said flow of sole $CO_2$ until reaching, in said chamber, a concentration of at least 60-80% by volume, preferably comprised between 65-80%, more preferably 100% of $CO_2$ such as to have an oxygen-free and air-free environment of said chamber so as to expose said food product to the sole $CO_2$.

2.    Method according to claim 1, wherein said chamber containing said infested food product is defined by

- a particular gas-barrier and heat-sealable shell (1) placed around a respective big-bag or sack; or
- a container (2), in particular an ISO container, containing the infested food product in loose form or stored in big-bags or in sacks.

3.    Method according to claim 1 or 2, wherein the flow of $CO_2$ is fed into said chamber in such a way as to have an

initial concentration of $CO_2$ comprised between 65% and 80% by volume.

4. Method according to any one of the preceding claims, wherein the temperature of the $CO_2$ in said chamber is comprised between 18°C and 40°C, preferably between 18°C and 30°C.

5. Method according to any one of the preceding claims, wherein the $CO_2$ entering said chamber is at a pressure slightly greater with respect to the atmospheric one, preferably at a pressure of about 0.2-0.5 bar greater with respect to the atmospheric pressure.

6. Method according to any one of the preceding claims, wherein said gas-barrier and heat-sealable shell (1) has a permeability in terms of $O_2$ lower than or equal to 3.0 $cc/m^2.24hr \cdot 1$ bar, preferably comprised between 0.5 and 3.0 $cc/m^2.24hr.1$ bar and even more preferably a permeability lower than 0.5 $cc/m^2.24hr.1$ bar,

said shell (1) being arranged around said big-bag or sack and closed by heat sealing after blowing $CO_2$ until reaching a $CO_2$ concentration of 100% in said chamber defined by said shell (1).

7. Method according to any one of claims 1 to 5, wherein in the case of a container (2), the $CO_2$ is blown continuously in such a way as to keep substantially constant the $CO_2$ concentration of 65-80% by volume, preferably 100% by volume, continuing to blow $CO_2$ to maintain substantially constant the concentration of 65-80%, preferably 100%, of $CO_2$, and the pressure inside the container (2) following possible leaks of $CO_2$.

8. System for performing the method of treatment in container (2) and/or big-bag (or sack) as defined in the preceding claims 1 to 7, comprising:

a source (3) of fumigating agent composed of solely $CO_2$ in the form of cylinder, cylinder bundle or cryogenic unit containing solely $CO_2$;
a unit of management and control (5) electrically powered by an electrical supply line (8);
a feed line (4) of said fumigating agent composed solely of $CO_2$ connecting said source (3) of $CO_2$ to said unit for management and control (5);
at least one flow line (6 7, 7') of said fumigating agent composed solely of $CO_2$ exiting from said management and control unit (5) for feeding with said fumigating agent:

- at least one barrier shell or sack (1) inside of which a big-bag (or sack) containing the infested product is contained, and/or
- a container (2), in particular an ISO container, containing the infested product, loose or in big-bags (or sacks).

9. System according to claim 8, further comprising a heater (9) of $CO_2$, and/or valves with instruments apt to control the $CO_2$ pressure, temperature and concentration in said barrier sack (1) and/or in said container (2).

10. Method for the in-situ fumigant treatment of infestations or contaminations of insects (in the different stages of growth such as eggs, larvae or adults) and/or microorganisms present in tree species, including those that give rise to the aforesaid food products as defined in claim 1, said method comprising the steps of:

(a) covering the tree species with a barrier sack (1) forming a chamber with a determined free volume around said tree species, or
wrapping a barrier cloth around said tree species apt to form a chamber with a determined free volume,
said barrier sack and said barrier cloth being made in a barrier material having a permeability in terms of $O_2$ less than or equal to 3.0 $cc/m^2 \cdot 24hr \cdot 1$ bar, preferably comprised between 0.5 and 3.0 $cc/m^2 \cdot 24hr \cdot 1$ bar and again more preferably a permeability less than 0.5 $cc/m^2 \cdot 24hr \cdot 1$ bar;
(b) blowing a flow of fumigating agent composed solely of $CO_2$ having a temperature of at least 15°C, preferably under pressure, inside said chamber, feeding said flow so as to have an initial concentration of carbon dioxide of at least 40% by volume, preferably at least 60%, the part remaining to 100 being air,
continuing to blow said flow composed solely of $CO_2$ to achieve a 100% concentration of $CO_2$ and blowing $CO_2$ until maintaining substantially constant the 100% concentration of $CO_2$ in said chamber following possible leaks of $CO_2$.

FIG. 1

FIG. 2

Europäisches
Patentamt

European
Patent Office

Office européen
des brevets

# EUROPEAN SEARCH REPORT

**Application Number**

EP 16 18 2637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2002/182104 A1 (CARMAN GARY B [US] ET AL) 5 December 2002 (2002-12-05) * paragraphs [0041], [0042], [0044], [0045], [0047], [0048], [0049], [0051]; figures; examples * | 1-7 | INV. A23L3/3418 A01M13/00 A01G13/04 A23B7/148 A23B9/20 |
| Y | EP 2 165 613 A1 (SOC ES CARBUROS METALICOS SA [ES]) 24 March 2010 (2010-03-24) * paragraphs [0005], [0006], [0011] - [0020]; claims 1,2,8 * | 1-7 | B65D81/20 A01M17/00 |
| Y | WO 2004/008886 A1 (SOC ES CARBUROS METALICOS SA [ES]; SANCHEZ MOLINO FRANCISCO JAVIE [ES]) 29 January 2004 (2004-01-29) * page 4, line 13 - page 6; claims 1-3 * | 1-4 | |
| X | US 6 047 496 A (LEITNER KENNETH D [US] ET AL) 11 April 2000 (2000-04-11) * column 2, line 48 - column 3, line 37; figures 1-6 * * column 4, lines 31-51 * * column 5, line 12 - column 8, line 30 * * column 10, lines 54-61 * | 8,9 | |
| X | JP H09 249288 A (ISHIKAWAJIMA HARIMA HEAVY IND) 22 September 1997 (1997-09-22) * abstract; figure 1 * | 8 | TECHNICAL FIELDS SEARCHED (IPC) A23L A01M A01G A23B B65D |
| X | AU 2008 100 141 A4 (DENMEADE ANTHONY) 3 April 2008 (2008-04-03) * page 5; figures * | 10 | |
| A | WO 2011/053676 A2 (GLOBAL FRESH FOODS [US]; BELL LAURENCE D [US]) 5 May 2011 (2011-05-05) * paragraph [0061]; table 1 * | 6 | |

-/--

The present search report has been drawn up for all claims

| Place of search | Date of completion of the search | Examiner |
|---|---|---|
| Munich | 16 November 2016 | Muller, Isabelle |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 

& : member of the same patent family, corresponding
  document

EPO FORM 1503 03.82 (P04C01)

**Europäisches Patentamt**
**European Patent Office**
**Office européen des brevets**

# EUROPEAN SEARCH REPORT

Application Number

EP 16 18 2637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 063 418 A (SUGIMOTO TEIZO [JP] ET AL) 16 May 2000 (2000-05-16) * the whole document * ----- | 1-7 | |
| A | US 1 757 276 A (CLYDE VAUGHN) 6 May 1930 (1930-05-06) * the whole document * ----- | 10 | |

TECHNICAL FIELDS
SEARCHED      (IPC)

The present search report has been drawn up for all claims

| Place of search | Date of completion of the search | Examiner |
|---|---|---|
| Munich | 16 November 2016 | Muller, Isabelle |

EPO FORM 1503 03.82 (P04C01)

## ANNEX TO THE EUROPEAN SEARCH REPORT
## ON EUROPEAN PATENT APPLICATION NO.

EP 16 18 2637

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2016

| Patent document cited in search report | | Publication date | Patent family member(s) | | Publication date |
|---|---|---|---|---|---|
| US 2002182104 | A1 | 05-12-2002 | NONE | | |
| EP 2165613 | A1 | 24-03-2010 | EP | 2165613 A1 | 24-03-2010 |
| | | | EP | 2177117 A1 | 21-04-2010 |
| WO 2004008886 | A1 | 29-01-2004 | AT | 359718 T | 15-05-2007 |
| | | | AU | 2003237035 A1 | 09-02-2004 |
| | | | CA | 2472810 A1 | 29-01-2004 |
| | | | DE | 60313325 T2 | 27-12-2007 |
| | | | EP | 1523250 A1 | 20-04-2005 |
| | | | ES | 2204299 A1 | 16-04-2004 |
| | | | ES | 2286441 T3 | 01-12-2007 |
| | | | US | 2005163900 A1 | 28-07-2005 |
| | | | WO | 2004008886 A1 | 29-01-2004 |
| US 6047496 | A | 11-04-2000 | NONE | | |
| JP H09249288 | A | 22-09-1997 | NONE | | |
| AU 2008100141 | A4 | 03-04-2008 | NONE | | |
| WO 2011053676 | A2 | 05-05-2011 | AR | 078820 A1 | 07-12-2011 |
| | | | AU | 2010313457 A1 | 07-06-2012 |
| | | | CA | 2776555 A1 | 05-05-2011 |
| | | | CN | 102711491 A | 03-10-2012 |
| | | | CR | 20120222 A | 20-07-2012 |
| | | | DK | 2493324 T3 | 16-12-2013 |
| | | | EA | 201290214 A1 | 30-01-2013 |
| | | | EC | SP12011859 A | 29-06-2012 |
| | | | EP | 2493324 A2 | 05-09-2012 |
| | | | JP | 2013509185 A | 14-03-2013 |
| | | | JP | 2016028602 A | 03-03-2016 |
| | | | KR | 20120095930 A | 29-08-2012 |
| | | | NZ | 599192 A | 31-01-2014 |
| | | | PE | 01682013 A1 | 16-02-2013 |
| | | | US | 2012294987 A1 | 22-11-2012 |
| | | | WO | 2011053676 A2 | 05-05-2011 |
| US 6063418 | A | 16-05-2000 | AU | 712555 B2 | 11-11-1999 |
| | | | AU | 1171297 A | 14-07-1997 |
| | | | CN | 1205615 A | 20-01-1999 |
| | | | JP | 3615289 B2 | 02-02-2005 |
| | | | JP | H09163927 A | 24-06-1997 |
| | | | US | 6063418 A | 16-05-2000 |
| | | | WO | 9722258 A1 | 26-06-1997 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 16 18 2637

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2016

| Patent document cited in search report | Publication date | Patent family member(s) | Publication date |
|---|---|---|---|
| US 1757276 A | 06-05-1930 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08242830 B